**Europäisches Patentamt**

**European Patent Office**

**Office européen des brevets**

(19)

(11) **EP 1 403 684 A1**

(12) **EUROPEAN PATENT APPLICATION**

(43) Date of publication:
**31.03.2004 Bulletin 2004/14**

(51) Int Cl.⁷: $G02F\ 1/025$, $G02B\ 6/12$

(21) Application number: **02292403.9**

(22) Date of filing: **30.09.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **CORNING INCORPORATED**<br>**Corning, N.Y. 14831 (US)** | (72) Inventor: **Dr.Pearsall,Thomas**<br>**75002 Paris (FR)**<br><br>(74) Representative: **Le Roux, Martine et al**<br>**Cabinet Beau de Loménie**<br>**158, rue de l'Université**<br>**75340 Paris Cédex 07 (FR)** |

(54) **High-speed optical modulator**

(57) An optical modulator is constituted by a planar lightwave circuit incorporating a silicon waveguide (2) provided on a silica substrate (1). The silicon waveguide has a resonant cavity (5) formed therein. The resonant cavity (5) may conveniently be implemented as a periodic array of holes defining a photonic bandgap device. The waveguide may be a photonic crystal waveguide.

An electric field is applied to the resonant cavity (5) in order to alter the Q-factor, and hence the transmission properties, thereof, either via the MOS effect or via alteration of the width of the depletion region of a p-n junction. A control unit (10) controls the voltage that is applied to the resonant cavity (5). and thus controls the modulation of light at the resonant frequency/frequencies of the cavity (5).

FIG.3

EP 1 403 684 A1

**Description**

Background of the Invention

Field of the Invention

The present invention relates to the field of intensity modulation and switching of optical signals. More particularly, the present invention relates to an optical intensity-modulation method, and a device performing the method.

It is to be understood that in the present document references to "modulation" or "intensity-modulation" include modulation to such an extent that the signal is extinguished, in other words, the expression "modulation" covers a switching function. Also, references to "waveguides" include references to any structure conveying light and thus include but are not limited to lightwave optical circuit waveguides and optical fibres.

Technical Background

Wideband communications systems are being used to an increasing extent for transmission of multimedia information. An important function implemented in such systems is the intensity-modulation and switching of optical signals.

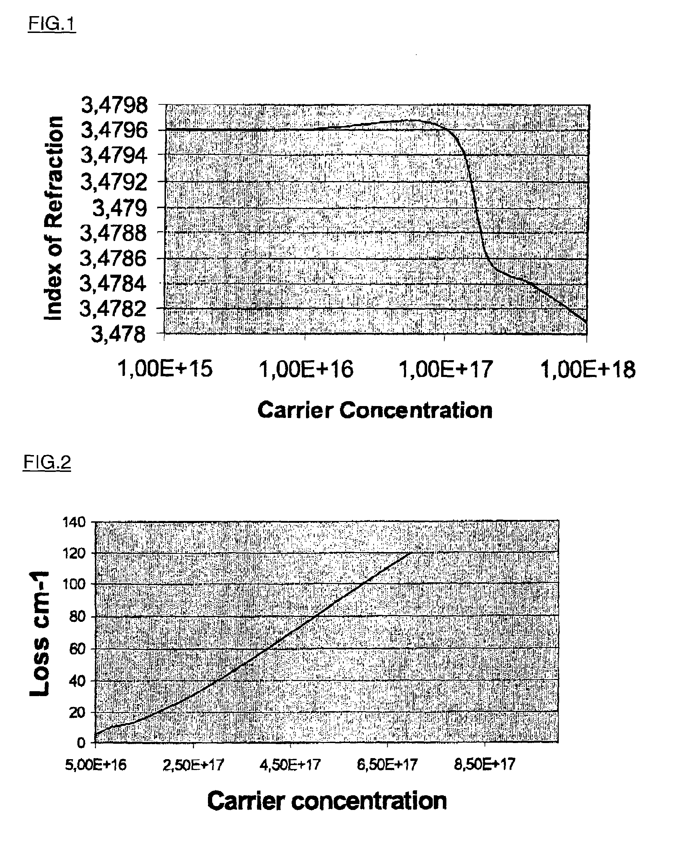

Various optical modulation and switching techniques are known, including some in which electro-absorption modulation is applied to an optical signal propagating in a silicon waveguide. It is well-known that the presence of free charge carriers will alter both the refractive index and the loss-factor (optical absorption) of silicon, and indeed of semiconductors in general. Fig.1 shows how the refractive index of silicon changes as the concentration of free carriers increases from $1\times10^{15}/cm^3$ to $1\times10^{18}/cm^3$. Fig.2 shows how optical loss in silicon changes as the concentration of free carriers increases from $5\times10^{16}/cm^3$ to $8.5\times10^{17}/cm^3$. In both cases, the effect of the carrier concentration increase only becomes noticeable when the carrier concentration reaches and exceeds $10^{17}/cm^3$. For carrier concentrations greater than this level, the change in refractive index and the change in optical loss are both proportional to the change in carrier concentration. However, known modulators based on electro-absorption in silicon waveguides have poor wavelength selectivity, and the modulation technique induces relatively high losses in the waveguide overall.

Preferred embodiments of the present invention provide an improved method of modulating the intensity of an optical signal, and a device implementing the method.

More especially, preferred embodiments of the present invention provide an optical modulation technique in which intensity-modulation is achieved for selected wavelengths of an optical signal propagating in a waveguide, and the overall losses in the waveguide are kept low.

Further, preferred embodiments of the invention provide an optical modulator which achieves useful modulation depth in a compact device (having dimensions of the order of several micrometers to several hundreds of micrometers).

Summary of the Invention

More particularly, the present invention provides a method of modulating the intensity of an optical signal, the method comprising the steps of: providing a waveguide defining a light path for said optical signal; providing a resonant cavity in said light path; and altering the transmission function of the resonant cavity whereby to control the degree of transmission of light of at least one selected frequency propagating in said light path.

Advantageously, the transmission function of the resonant cavity is changed by varying the concentration of free charge carriers in the resonant cavity. Various methods may be used to change the carrier concentration in the semiconductor, including, for example, changing the temperature, or applying external illumination. However, according to the present invention it is preferred to control the carrier concentration by application of a voltage.

In one preferred embodiment of the invention, the free carrier concentration is changed through use of the MOS effect. More particularly, a MOS (metal-oxide-semiconductor) structure is provided at the resonant cavity, and a voltage is applied to the metal electrode so as to cause energy band bending in the semiconductor. The band bending is sufficient to cause charge carriers in the valence band to enter the conduction band, forming an inversion region in the semiconductor at the interface between the semiconductor and the oxide. In this inversion region, the free carriers are of the opposite polarity to the doping of the semiconductor. For example, in a device using a layer of p-type semiconductor (e.g. p-type silicon) adjacent to an oxide layer bearing a metal biasing-electrode, a relatively high bias voltage applied to the metal electrode will cause accumulation of free electrons at the interface between the p-type semiconductor and the adjacent oxide.

In a second preferred embodiment of the invention, the free carrier concentration is changed by applying a bias voltage across a p-n junction. This alters the local carrier concentration in the spatial charge region of the p-n junction. The spatial charge (and, thus, the local carrier concentration) of a p-n junction is strongly dependent upon the electrical bias of the junction. Under reverse bias, carrier depletion occurs, and the carrier concentration diminishes strongly (at distances of up to several micrometers from the junction).

The present invention further provides an optical signal modulator comprising: a waveguide defining a light path for an optical signal; a resonant cavity provided in said light path; and a control unit for altering the transmission characteristic of the resonant cavity whereby to control the degree of transmission of light of at least one selected frequency propagating in said light path.

The waveguide may be built in different ways. Advantageously, the waveguide is built using the principles of photonic crystal waveguides or total internal reflection waveguides, or it may combine the two.

In preferred embodiments of the invention, the resonant optical cavity is provided in the light path by providing a plurality of holes defining a photonic crystal in the waveguide. Such a photonic crystal provides a resonant cavity having a high Q-factor, in the space of a few microns. Thus, such cavities are referred to as "microcavities".

In preferred embodiments of the invention, the waveguide is a silicon waveguide, that is, it has a silicon (Si) core layer. The silicon waveguide may be formed in the topmost, silicon layer of a silicon-on-insulator (SOI) substrate. Silicon is not an optically-active or optically non-linear material. Nevertheless, according to the present invention, a silicon waveguide can be used as an efficient modulator by providing a resonant cavity in the waveguide and controlling the transmission characteristic of that cavity.

According to the first preferred embodiment of the invention, the silicon core layer is clad with a dielectric such as silica ($SiO_2$) or is provided with a dielectric under-layer, and the transmission characteristic is controlled by applying an electric field to the interface between the silicon core and the cladding (or underlayer) at that portion of the waveguide corresponding to the resonant cavity. The applied electric field alters the free carrier concentration at the interface region of the silicon, by the MOS effect described above, effectively injecting free carriers into the body of the resonant cavity. According to the second preferred embodiment of the invention, a p-n junction is formed in that portion of the silicon waveguide corresponding to the resonant cavity. An applied electric field alters the free carrier concentration at the junction.

By raising the free carrier concentration the quality-factor, or "Q", of the resonant cavity is lowered, reducing transmission. Conversely, by reducing the free carrier concentration, the Q-factor of the resonant cavity is raised, increasing transmission. It is possible to change the free carrier concentration by at least 3 orders of magnitude without having to use extremely great changes in applied bias voltage. This causes a corresponding degree of change in Q-factor, and a corresponding modulation of the light propagating in the waveguide. However, the modulation is achieved only for resonant wavelengths. Thus, the modulation is wavelength-specific, and overall losses in the waveguide are kept low.

Because the semiconductor material whose absorption is being modulated is located within a resonant cavity, the effective absorption of the semiconductor material is multiplied roughly by the Q-factor of the cavity. Optical cavities having Q-factors up to several thousands are not uncommon. This allows deep modulation of the signal to be achieved in a compact optical device, that is, an optical device having dimensions of the order of several micrometers to several hundreds of micrometers. Such devices are of the order of 100 times smaller than previous known optical modulators. Modulation of the absorption of silicon by itself (in the absence of use of a resonant cavity) would not be strong enough to obtain useful modulation depth in an optical device of this size.

The present invention still further provides a planar silicon waveguide defining a light path for an optical signal and having a resonant cavity in the light path. Preferably the resonant cavity is implemented as a photonic crystal.

Further features and advantages of the present invention will become apparent from a reading of the following description of preferred embodiments thereof, given by way of example, with reference to the accompanying drawings.

Brief Description of the Drawings

Fig.1 is a graph showing how the refractive index of silicon changes with free carrier concentration;

Fig.2 is a graph showing how the optical loss of silicon changes with free carrier concentration;

Fig.3 is a schematic representation of a waveguide modulator according to a first preferred embodiment of the present invention;

Fig.4 is a diagram illustrating the interface region between a silicon waveguide core and a silica overclad layer in a waveguide modulator according to Fig.3;

Fig.5 is a graph showing how free carrier concentration changes with applied voltage $V_g$ in the resonant cavity of the device of Fig.3;

Fig.6 is a graph showing how optical absorption in the resonant cavity changes with applied voltage $V_g$ in the device of Fig.3;

Fig.7 is a diagram illustrating steps in the fabrication of the device of Fig.3, in which Figs.7a to Fig.7e illustrate successive steps in the process;

Fig.8 shows examples of photonic crystal waveguides and associated microcavities, in which:

Fig. 8A shows a first example, in which the microcavity is in line with the waveguide, and Fig. 8B shows a second example, in which the microcavity is adjacent to the waveguide;

Fig.9 is a schematic representation of a cross-section through one configuration of waveguide modulator according to a second preferred embodiment of the present invention;

Fig. 10 is a schematic representation of a cross-section through an alternative (preferred) configuration of waveguide modulator according to the second preferred embodiment of the present invention;

Fig.11 is a graph showing how free carrier concentration and the dimensions of the depletion region change with applied voltage, in a waveguide modulator having the configuration of Fig. 10;

Fig. 12 is a schematic representation of the waveguide modulator having the configuration of Fig.10 and implemented using a photonic crystal waveguide;

Fig. 13 is a cross-section through a practical device implementing the structure of Fig.12; and

Fig.14 illustrates a portion of Fig. 13, and shows the depletion region.

Detailed Description of the Preferred Embodiments

As explained above, the present invention makes use of the fact that the optical properties of semiconductors, notably silicon, vary with the free carrier concentration therein. Returning to Figs.1 and 2 it will be seen that, as carrier concentration increases beyond $10^{17}/cm^3$, the percentage change in refractive index is relatively small (because the refractive index starts from a relatively large value), whereas the percentage change in optical loss is large compared to the (substantially zero) starting value thereof. The preferred embodiments of the present invention accordingly operate by modulating the optical loss of a resonant cavity by changing the free carrier concentration thereof.

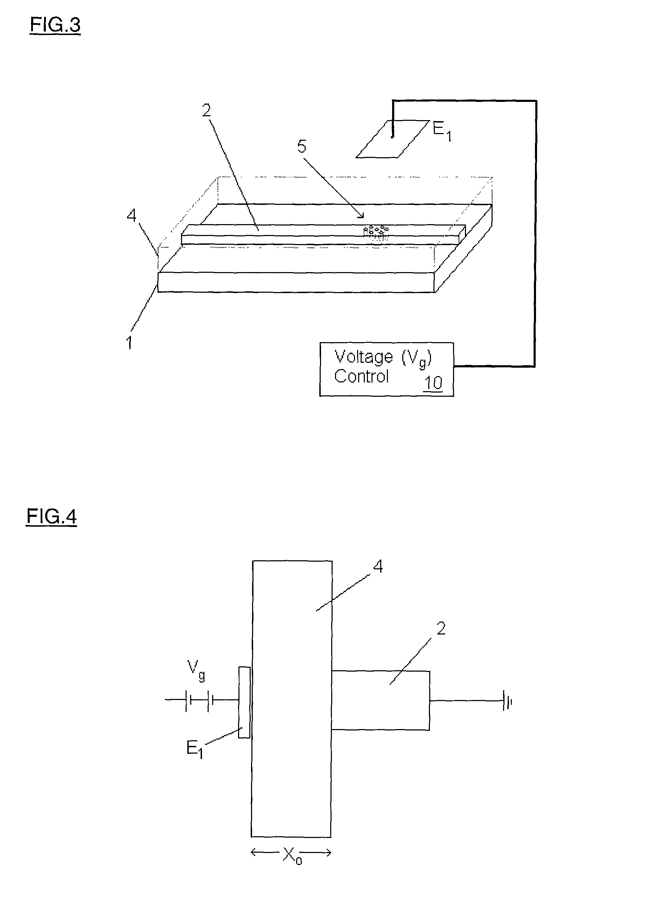

A first preferred embodiment of optical modulator according to the present invention is illustrated schematically in Fig.3. As shown, this optical modulator includes a substrate 1 made of a dielectric material, in this example silica ($SiO_2$), upon which a planar silicon waveguide structure is formed. (As illustrated, a total-internal-reflection type waveguide is used but a photonic crystal waveguide could be used instead.) The planar waveguide includes a silicon core layer 2 and an overclad layer 4, making up a single-mode silicon waveguide. The overclad layer 4 is formed of a dielectric material, in this case silica. Incidentally, in Fig.3, the silica overclad layer 4 is represented as if it were transparent. The waveguide incorporates a resonant cavity 5, through which all photons propagating in the waveguide must pass.

It is advantageous to implement the resonant cavity 5 using a photonic bandgap structure, notably an array of holes formed in the silicon core layer 2. The pitch of the holes in the array is of the same order of magnitude as half the wavelength of the signal in the waveguide core. For example, for a wavelength of 1.55 µm, the pitch of the holes ranges from 0.35µm-0.7µm (depending upon the geometry of the array and the waveguide). Moreover, the photonic crystal is designed such that photonic band gap encompasses the signal wavelength. Such a structure can be formed during the lithography and etching steps used to pattern the silicon core layer. Thus, the number of steps involved in fabricating the optical modulator is not unduly increased. Incidentally, in Fig.3, for ease of representation, the number of holes shown in the array defining the photonic bandgap device is less than would actually be present.

An electrode $E_1$ is attached to the silica above the resonant cavity 5, so as to form a MOS structure at the resonant cavity. In this example, the metal layer of the MOS structure is constituted by the electrode $E_1$, the oxide is formed by the $SiO_2$ overclad layer 4 and the semiconductor is constituted by the silicon core layer 2. An electric field can be applied to the semiconductor-oxide interface by application of a voltage to the electrode $E_1$. In Fig.3, for greater clarity, the electrode $E_1$ is represented spaced away from the resonant cavity 5. With an applied voltage, Vg, of appropriate polarity, it is possible to raise the energy of the valence band of the silicon waveguide so that it is above the energy of the conduction band near the interface. This creates an inversion condition, and free charge carriers are caused to accumulate at the interface. As is well-known, for a silicon core layer that has p-type doping the applied voltage Vg should be positive in order to cause the desired inversion condition, and for an n-type silicon core layer 2 Vg should be negative.

The oxide overclad 4 should have a level of interface states that is low enough to allow conductivity inversion to take place in the silicon core layer 2 at the interface between the oxide layer 4 and the silicon waveguide core layer 2. A suitable level is $10^{11}/cm^2$ interface states or fewer. The skilled person will appreciate that the number of interface states (or "interface trapped charges") depends upon the technology and process conditions used to fabricate the interface.

Fig.4 illustrates the interface region between the silicon waveguide core 2 and the silica overclad layer 4. The thickness of the silicon dioxide layer 4 is represented by $X_0$. If the voltage drop across the silicon layer 2 is represented by $\varphi_s$, and the electric field at the interface between the silicon dioxide and the silicon is represented by $\varepsilon_s$, then the bias voltage $V_g$ obeys the relation:

$$V_g = \varphi_s + (K_s/K_{ox}) X_0 \, \varepsilon_s,$$

where $K_s$ is the relative permittivity of the silicon layer 2 and $K_{ox}$ is the relative permittivity of the silicon dioxide layer 4. Typically, $K_s$ is 11.9 and $K_{ox}$ is 3.9, giving ($K_s/K_{ox}$) of 3.4.

For a case where the silicon core layer 2 is n-type, doped to $10^{15}/cm^3$, and the interface charge is $10^{11}/cm^2$, application of a -1.15 Volt bias voltage, via electrode $E_1$, produces an electric field at the silica/silicon interface of 15kV/cm, band bending in the silicon layer of 0.641 volts, and p-type accumulation in the silicon core layer 2 of $5\times10^{15}$/cm$^3$ at the interface, dropping to $2.4\times10^{13}$/cm$^3$ within the silicon core layer at a distance 100 nm away from the interface. The p-type free charge carriers spoil the Q-factor of the resonant cavity, thus lowering the transmission of light at the resonant wavelength(s).

For a case where the silicon core layer 2 is n-type, doped to $10^{15}$/cm$^3$, and the interface charge is $10^{12}$/cm$^2$, application of a -6.6 Volt bias voltage, via electrode $E_1$, produces an electric field at the silica/silicon interface of 168kV/cm, band bending in the silicon layer of 0.8098 volts, and p-type accumulation in the silicon core layer 2 of $3\times10^{18}$/cm$^3$ at the interface, dropping to $7\times10^{14}$/cm$^3$ within the silicon core layer at a distance 100 nm away from the interface.

For a case where the silicon core layer 2 is n-type, doped to $10^{15}$/cm$^3$, and the interface charge is $10^{13}$/cm$^2$, application of a -55 Volt bias voltage, via electrode $E_1$, produces an electric field at the silica/silicon interface of $1.77\times10^6$V/cm, band bending in the silicon layer of 0.9342 volts, and p-type accumulation in the silicon core layer 2 of $4.5\times10^{20}$/cm$^3$ at the interface, dropping to $7.7\times10^{17}$/cm$^3$ within the silicon core layer at a distance 100 nm away from the interface.

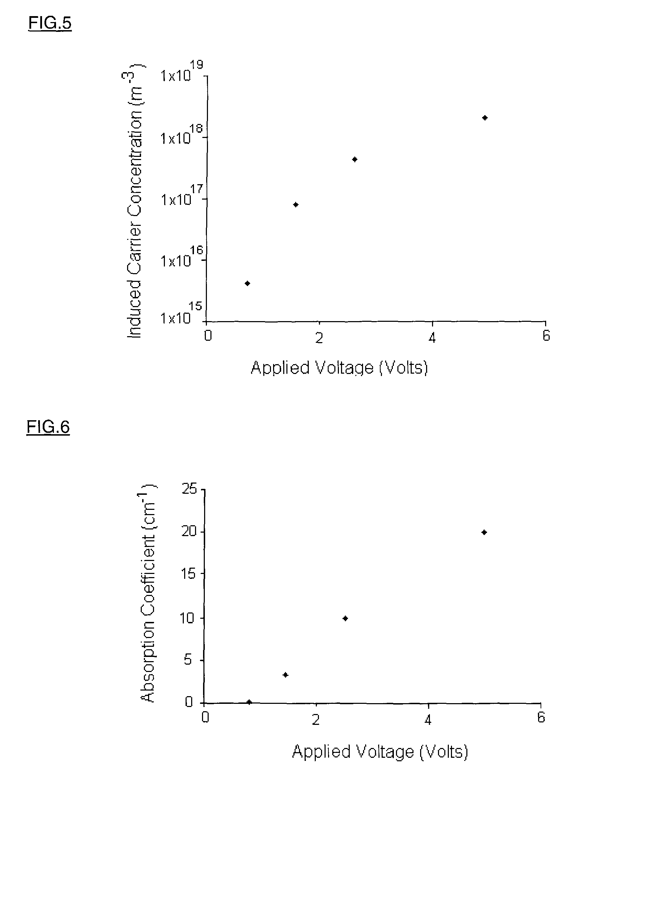

Fig.5 is a graph of induced carrier concentration, at the interface between the silica layer 4 and the silicon core layer 2 in the region of the resonant cavity 5, versus applied voltage. Fig.5 shows how the carrier concentration in the resonant cavity changes with voltage applied to the electrode $E_1$.

The presence of free charge carriers raises the loss of the resonant cavity 5 in proportion to the concentration of free carriers. This loss changes the Q-factor of the resonant cavity, again in proportion to the free-carrier concentration. The higher the free carrier concentration, the lower is the Q-factor of the resonant cavity. Reasonable voltage changes can cause the free carrier concentration to change by three orders of magnitude or more. Thus, the cavity Q-factor can be modulated over several orders of magnitude. Fig.6 is a graph of optical absorption (for a resonant wavelength of 1550 nm) versus voltage applied to the electrode $E_1$. It will be seen from Fig.6 that the optical absorption coefficient of the resonant cavity 5 increases dramatically for relatively modest applied voltages.

The experimental set-up used to obtain the results represented in Figs.5 and 6 involved coupling light into the silicon waveguide from an external source. A tapered optical fiber was used for this purpose, and the coupling between the tapered optical fiber and the silicon waveguide was optimised by altering the relative position of the optical fiber and silicon waveguide so as to maximise the output from the silicon waveguide. The wavelength selection of the resonant cavity was checked by measuring transmission versus wavelength. Then the output from the silicon waveguide at the selected wavelength was measured for different values of voltage applied to the electrode $E_1$.

The modulator of Fig.3 is designed to enable a selected wavelength $\lambda_s$, of light to be modulated (or, if desired, a plurality of wavelengths which are not obliged to have a harmonic relationship). The wavelength selection is made via appropriate design of the resonant cavity 5, given that the modulated wavelength corresponds to the resonant frequency of the cavity. In the case where the resonant cavity 5 is implemented as a photonic bandgap device consisting of a periodic array of holes formed in the silicon core layer 2, the selection of resonant frequency (or frequencies) is made by filling selected holes in the array (or simply by not forming holes at the appropriate locations).

The theory of photonic crystal resonators is well-known and so details of resonator design are not given here. If required, more information on photonic crystals in general can be found in "Photonic crystals: molding the flow of light", a book by J.D. Joannopoulos, R. Meade, and J.N. Winn, Princeton University Press, 1995, and an example of design of a planar photonic crystal can be seen in "Defect Modes of a Two-Dimensional Photonic Crystal in an Optically Thin Dielectric Slab" by O. Painter, J. Vuckovic, and A. Scherer, Journal of the Optical Society of America B, 16(2), 275-285, Feb. 1999.

In order to modulate the selected wavelength, $\lambda_s$, of light propagating in the silicon waveguide, a control unit 10 controls the level of the voltage $V_g$ applied to the resonant cavity. By increasing the magnitude of the applied voltage, $V_g$, the Q-factor of the resonant cavity is reduced, thus reducing the amount of light at the selected wavelength, $\lambda_s$, that is transmitted.

Also, if the applied voltage is set at a sufficient level (referred to below as the "blocking voltage"), the selected wavelength, $\lambda_s$, will be prevented from propagating further along the waveguide. Thus, the modulator can be operated as a switch, selectively operable to permit or prevent transmission of the selected wavelength, $\lambda_s$. When light at the selected wavelength, $\lambda_s$, is to be allowed to pass, the control means does not apply a voltage to the electrode $E_1$. When light at the selected wavelength, $\lambda_s$, is not to be allowed to pass, then the control unit 10 applies the blocking voltage to the electrode $E_1$.

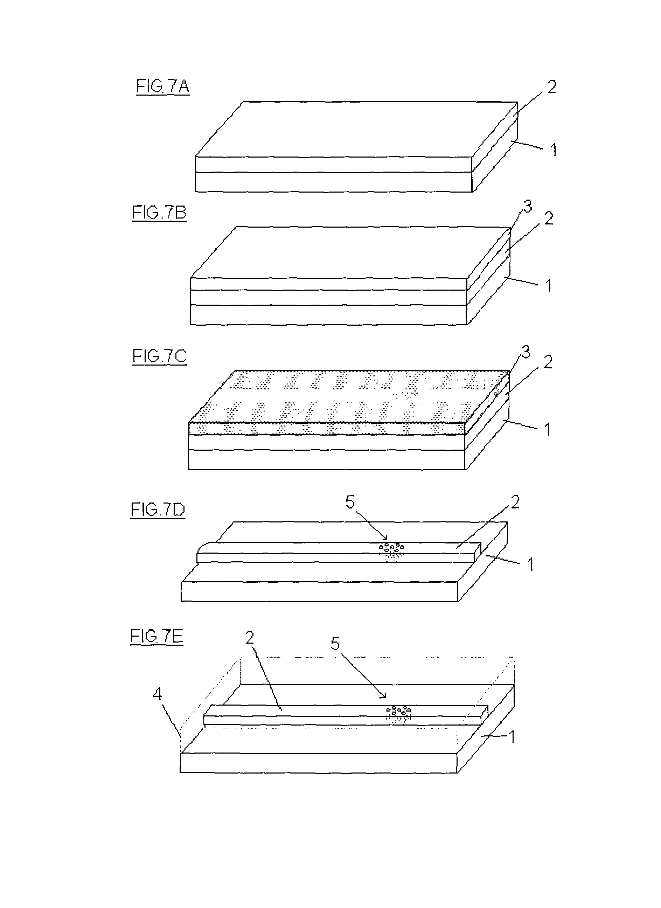

The fabrication of the planar structure of Fig.3, incorporating the silicon waveguide and the resonant cavity 5, will now be described with reference to Fig.7.

As shown in Fig.7A, first a wafer is formed consisting of a silicon layer 2 provided on a silicon dioxide ($SiO_2$) substrate 1. The wafer is next covered with a film 3 of polymethyl methacrylate (PMMA) resist, as shown in Fig.7B. Selected portions of the PMMA film are then sensitized through exposure to an electron-beam in an electron-beam lithography pattern generator. The sensitized PMMA resist film portions thus reproduce the desired pattern. The sensitized portions are represented by grey colouring in Fig.7C. The pattern is developed and then used as a mask for plasma etching (here ion-beam etching, although reactive ion etching (RIE), inductively-coupled plasma (ICP) etching, etc. could be used), so as to remove unwanted portions of the silicon layer 2 and produce the structure represented in Fig.7D. Advantageously, this structure is then covered by a silicon dioxide overclad layer 4, to produce a planar lightwave circuit as shown in Fig.7E.

As a variant of the above-described fabrication process, the lithography and etching steps can be adapted to create just the silicon waveguide structure in an initial phase, with the resonant cavity 5 being formed in a subsequent phase.

The resonant cavity 5 is preferably formed by providing an array of holes in the waveguide. As mentioned above, specific resonant wavelengths are selected by filling in selected holes of the array, or more simply by not forming those holes in the first place. An apt analogy can be drawn between this process and the covering of holes in a flute so as to produce notes of different pitch. When working at the wavelengths typically involved in optical telecommunications (notably 1.55µm), the cavity 5 can be smaller than 10-20µm.

Once the planar lightwave circuit incorporating the silicon waveguide 2 and resonant cavity 5 has been made, the electrode $E_1$ can be formed in situ by further lithography and etching steps, using known techniques, and a bonding wire can be attached, using conventional wire-bonding methods known for microelectronic integrated circuits.

In the first preferred embodiment of the invention the number of free carriers in the resonant cavity is controlled by regulating conditions at the interface between a silicon core and a neighbouring dielectric layer. In the above description referring to Figs.3, 4 and 7, the neighbouring dielectric layer is a silica overclad layer 4, in other words the interface is at the upper surface of the silicon layer (as oriented in Fig.3). However, the relevant interface could be provided at the lower surface of the silicon core layer. This would involve placing a conductive layer under a silica under-cladding layer, so as to be able to apply the required controlling voltage. This can be done relatively simply by using a well-known silica-on-insulator substrate as the substrate 1

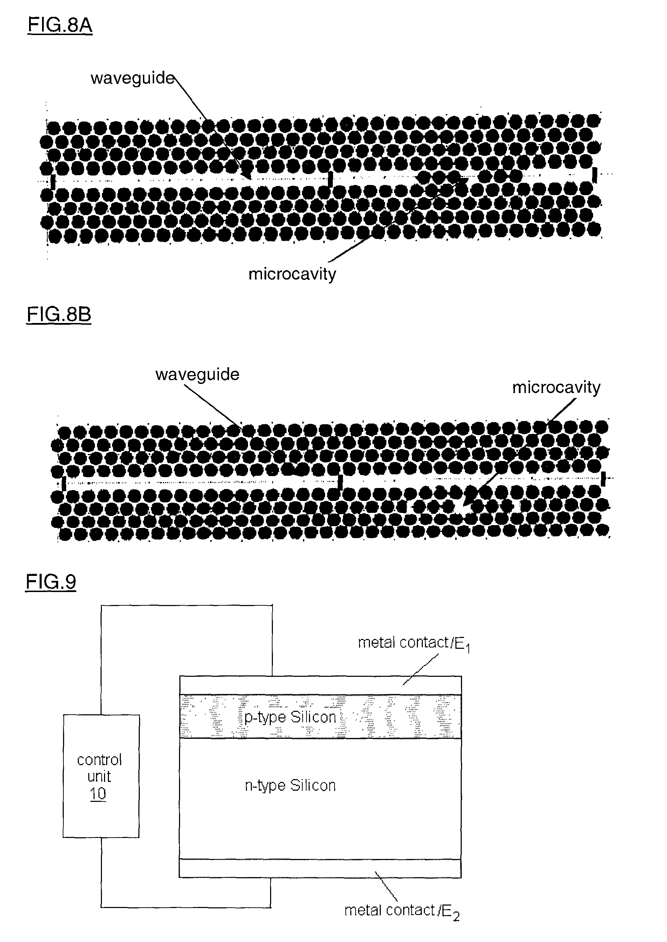

In the above description of the first preferred embodiment of the invention, the modulator uses a planar silicon waveguide and the resonant cavity is provided by a photonic crystal defined using an array of holes. However, the same effects can be obtained using a photonic crystal waveguide and a microcavity provided in the waveguide or adjacent thereto, the microcavity constituting the resonant cavity. Fig.8a) and 8b) illustrate the general structure of such devices. When the first embodiment of the invention is implemented using a photonic crystal waveguide and microcavity, typically the silicon core layer 2 is 300 nm thick and the silica overclad layer 4 has a thickness of 100nm or less.

The modulator according to the first preferred embodiment of the invention is effective to modulate light traveling through the above-described planar waveguide structure. However, calculations have shown that the inversion region that is created within the silicon core layer 2, at the interface with the silica overclad layer 4, extends only a short physical distance away from the interface. More particularly, the region in which the free carrier concentration can be brought to exceed $10^{17}/cm^3$ typically extends from the interface with the overclad 4 down to a depth of only 10 nm or so into the core layer 2. The effectiveness of the modulator would be improved if the size of this region could be increased (ideally to match the size of the silicon core layer).

A second preferred embodiment of the invention will now be described in which the free-carrier concentration in the waveguide core can be modulated over a larger region within the waveguide, thus improving effectiveness of the modulation.

According to the second preferred embodiment of the invention, an optical modulator has a resonant cavity 5 in the light path defined by a waveguide 2, and there is a p-n junction provided at the resonant cavity. Fig.9 illustrates schematically a cross-section through such a modulator, at the resonant cavity. The p-n junction is established here by forming the waveguide and resonant cavity structure using superposed layers of oppositely-doped material (illustrated in Fig.9 as p-type silicon overlying n-type silicon). At the resonant cavity, the depletion region between the areas of n-type and p-type doping has a reduced concentration of charge carriers and, thus, the optical loss in this region is lower than the optical loss in the adjacent n-type and p-type doped regions. By applying a reverse bias voltage to the p-n junction (using electrodes $E_1$ and $E_2$ and the voltage control unit 10) the size of the depletion region increases, thus reducing the optical loss of the cavity. Light at a selected wavelength (the resonant wavelength) passing through the waveguide can be modulated by appropriate control of the level of the reverse biasing voltage applied to the p-n junction at the resonant cavity.

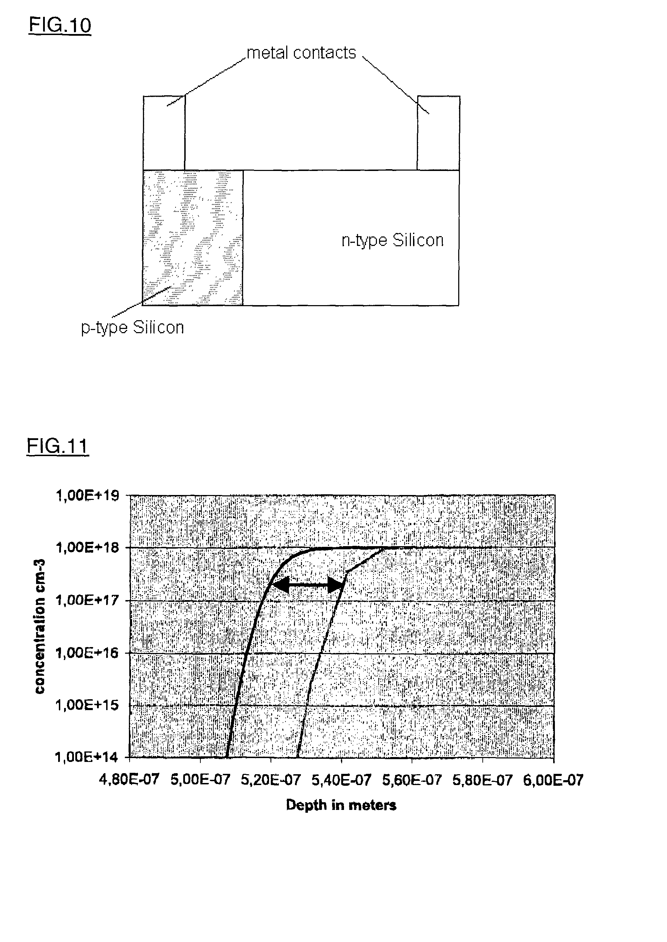

It has been realized that fabrication of the optical modulator of the second preferred embodiment of the invention can be simplified by altering the geometry of the p-n junction. More particularly, instead of using superposed layers of oppositely-doped material, the oppositely-doped regions can be arranged side-by-side. This arrangement is illustrated schematically in Fig. 10.

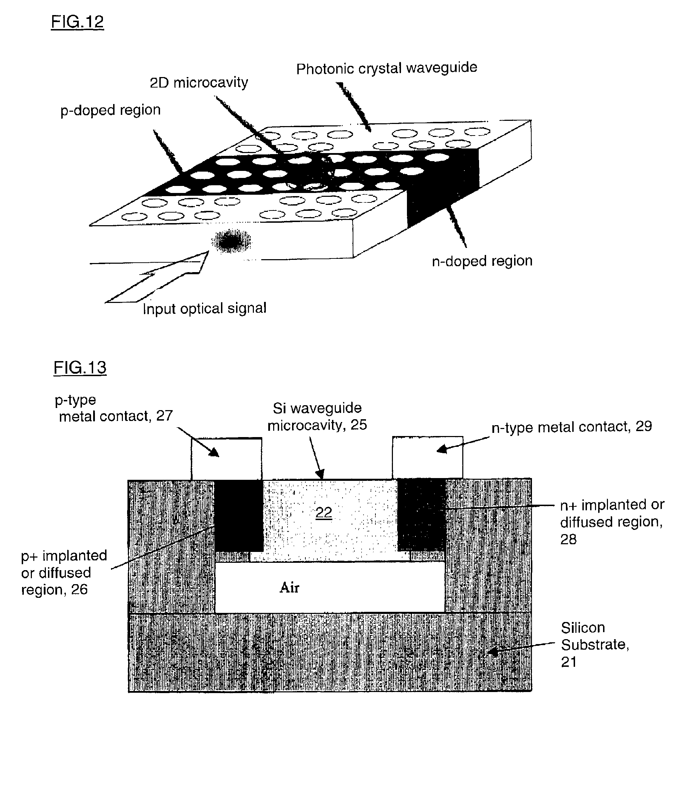

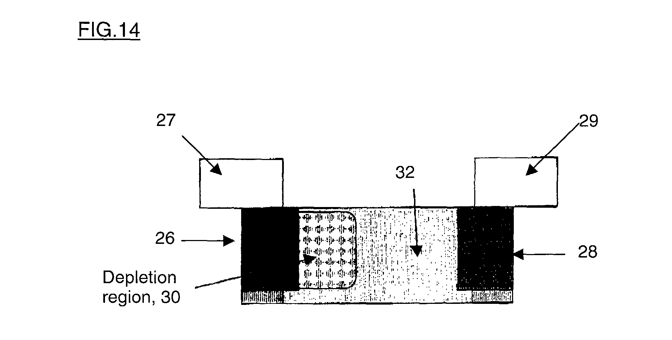

Fig.11 is a graph showing how free-carrier concentration (and thickness of the depletion region) vary with applied reverse-bias voltage in a p-n junction of the latter type, implemented in silicon. In the example used to generate Fig. 11, the doping was $10^{18}/cm^3$ on both sides of the junction. The left-hand curve in the graph illustrates the free-carrier concentration and depletion layer thickness with no applied voltage, whereas the right-hand curve in the graph illustrates the free-carrier concentration and depletion layer thickness with an applied reverse bias of 2 volts. It will be seen that the 2V applied reverse bias increases the size of the depletion region (the region of low free-carrier concentration/reduced optical loss) by approximately 20nm. In other words, referring to Fig. 14, application of the 2V biasing voltage makes the depletion region 30 (represented as a checkerboard area) extend further towards the right of the figure.

Fig.12 schematically represents the overall structure of an optical modulator according to the second preferred embodiment using a photonic crystal waveguide and microcavity, and configured as in Fig.10. In Fig.12, for ease of understanding the electrodes have not been shown.

Fig. 13 shows a more detailed picture of the microcavity structure, in cross-section. In this example, a silicon substrate 21 supports an n-type silicon region 22. This silicon region 22 has background doping of, $10^{17}/cm^3$ or $10^{18}/cm^3$, for example, and with the underlying air pocket constitutes a resonant cavity (microcavity 25). A $p^+$ region 26 and an $n^+$ region 28 serve to create the desired p-n junction. A metal contact 27 is provided to the $p^+$ region and a metal contact 29 is provided to the $n^+$ region. The $p^+$ region 26 and $n^+$ region 28 are typically formed by implantation or diffusion of a p-type dopant (e.g. boron) and an n-type dopant (e.g. phosphorus) respectively.

Between the p region 26 and n region 28 there is a transition region where the carrier concentration changes from strongly p-type to strongly n-type. The loss in the microcavity is lowest in this region. By applying a voltage in reverse bias across the p-n junction, the width of this low-loss region can be enlarged, thereby lowering the loss of the cavity and raising the cavity Q-factor.

Fig.14 illustrates the effect of applying a reverse bias to the p-n junction in Fig. 13. The region labeled 32 has a high density of free electrons because of the background doping of the corresponding region 22 shown in Fig. 13. Application of the reverse bias creates a depletion region 30 (shown as a checkered area in Fig. 14), which extends further and further towards the right of the figure as the biasing voltage is increased, with a corresponding progressive lowering of the cavity's optical loss. Eventually, a high biasing voltage will cause the depletion region 30 to extend the full width of the microcavity (that is, to extend from region 26 to region 28), thus attaining a lowest-loss configuration, unless avalanche breakdown occurs. Clearly, optical loss can be modulated by varying the reverse-biasing voltage applied to the p-n junction. In order for the modulation function to be available, it is clear that the width of the cavity must be sufficient such that, at zero applied biasing voltage, the depletion region 30 does not already extend the full width of the cavity.

With current designs of photonic crystal waveguides, if the microcavity is formed using a single defect, then the cross-sectional dimensions of the waveguide would be 300 nm (height in Fig. 14) by 500 nm (width in Fig. 14).

Depletion characteristics of silicon are well-known. If the background doping of the silicon region 32 (22) is $10^{17}/cm^3$, then avalanche breakdown would occur at 10V. However, using forward and reverse biasing, the width of the depletion region 30 can be modulated from 50nm to 500 nm (in other words, the depletion region 30 can be made to extend the full width of the waveguide/microcavity by application of biasing voltage) without avalanche breakdown occurring. But, with this level of background doping, even when the cavity loss is changed from the maximum to the minimum value the variation in cavity Q-factor is moderate.

On the other hand, if the background doping of the silicon region 32 (22) is $10^{18}/cm^3$, then avalanche breakdown would occur at 3V. In this case, using forward and reverse biasing, the width of the depletion region 30 can be modulated from 10nm to 50 nm, in other words, the depletion region 30 cannot be made to extend the full width of the waveguide/microcavity). However, even so, when the cavity loss is changed from the maximum to the minimum value a greater variation can be obtained in the cavity Q-factor.

While the invention has been particularly illustrated and described with reference to preferred embodiments thereof, it will be understood by those skilled in the art that the above-mentioned and other alterations may be made without departing from the scope of the invention as defined in the accompanying claims.

For example, in the method of fabricating the planar lightwave device incorporating the silicon waveguide and resonant cavity, the lithography and etching of the silicon dioxide and silicon layers can be performed using known techniques other than electron-beam lithography and plasma etching (for example chemically-assisted ion-beam etching (CAIBE) can be employed), and resist materials other than PMMA may be used.

Moreover, in the first preferred embodiment of the invention, although the overclad (or under-clad) material is described as silica, alternatively other dielectric materials could be used, such as other oxides, $Si_3N_4$, etc.

In preferred embodiments of the invention in which the resonant cavity is implemented using a photonic crystal structure, this photonic crystal structure can be a 1-dimensional structure, in view of the fact that signal propagation follows the axis of the waveguide. In practice, the 1-D photonic crystal could be implemented as a series of trenches, oriented at an appropriate angle relative to the waveguide axis according to the desired value of resonant frequency, with a 1-D microcavity located at the centre of the series.

## Claims

1. A method of modulating an optical signal comprises the steps of:

   providing a waveguide (2) defining a light path for said optical signal;
   providing a resonant cavity (5) in said light path; and
   altering the transmission characteristic of the resonant cavity (5) whereby to control the degree of transmission of light of a selected frequency propagating in said light path.

2. The modulation method of claim 1, wherein the waveguide-providing step comprises providing a waveguide (2) selected in the group consisting of photonic crystal waveguides, total internal reflection waveguides, and waveguides combining the principles of photonic crystal waveguides and total internal reflection waveguides.

3. The modulation method of claim 1 or 2, wherein the resonant-cavity-providing step comprises providing a plurality of holes defining a photonic bandgap device in the waveguide.

4. The modulation method of claim 1, 2 or 3, wherein the waveguide-providing step comprises providing a waveguide (2) having a silicon (Si) core layer clad with silica ($SiO_2$).

5. The modulation method of claim 4, wherein the transmission-characteristic-altering step comprises the step of applying an electric field to the resonant cavity (5) whereby to cause the MOS effect and alter the Q-factor of the cavity.

6. The modulation method of claim 1 or 2, and comprising the step of providing a p-n junction in the waveguide at the resonant cavity, wherein the transmission-characteristic-altering step comprises the step of applying a biasing electric field to the p-n junction whereby to alter the Q-factor of the cavity.

7. An optical signal modulator, comprising:

   a waveguide (2) defining a light path for an optical signal;
   a resonant cavity (5) in said light path; and
   a control unit (10) for altering the transmission characteristic of the resonant cavity whereby to control the degree of transmission of light of a selected frequency propagating in said light path.

8. The optical signal modulator of claim 7, wherein the waveguide (2) is selected in the group consisting of photonic crystal waveguides, total internal reflection waveguides, and waveguides combining the principles of photonic crystal waveguides and total internal reflection waveguides.

9. The optical signal modulator of claim 7 or 8, wherein the resonant cavity (5) comprises a plurality of holes defining a photonic bandgap device in the waveguide.

10. The optical signal modulator of claim 7, 8 or 9, wherein the waveguide has a silicon (Si) core layer clad with silica ($SiO_2$).

11. The optical signal modulator of claim 10, wherein the control unit is adapted, in use, to apply an electric field to the resonant cavity (5) whereby to cause the MOS effect and alter the Q-factor of the cavity.

12. The optical signal modulator of claim 7 or 8, and comprising a p-n junction provided in the waveguide at the resonant cavity, wherein the control means is adapted, in use, to apply a biasing electric field to the p-n junction whereby to alter the Q-factor of the cavity.

13. A planar silicon waveguide defining a light path, the waveguide having a resonant cavity (5) formed in the light path.

14. The planar silicon waveguide of claim 13, wherein the resonant cavity (5) is constituted by a photonic bandgap device.

FIG.1

FIG.2

FIG.3

FIG.4

FIG.5

FIG.6

FIG.7A

2

1

FIG.7B

3

2

1

FIG.7C

3

2

1

FIG.7D

5

2

1

FIG.7E

2

5

4

1

## FIG.8A

waveguide

microcavity

## FIG.8B

waveguide

microcavity

## FIG.9

metal contact/E₁

p-type Silicon

control
unit
10

n-type Silicon

metal contact/E₂

FIG.10

metal contacts

p-type Silicon

n-type Silicon

FIG.11

## FIG.12

p-doped region

2D microcavity

Photonic crystal waveguide

n-doped region

Input optical signal

## FIG.13

p-type metal contact, 27

Si waveguide microcavity, 25

n-type metal contact, 29

22

n+ implanted or diffused region, 28

p+ implanted or diffused region, 26

Air

Silicon Substrate, 21

## FIG.14

27

29

32

26

28

Depletion
region, 30

**EP 1 403 684 A1**

**European Patent Office**

**EUROPEAN SEARCH REPORT**

Application Number

EP 02 29 2403

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 058 127 A (JOANNOPOULOS JOHN D ET AL) 2 May 2000 (2000-05-02)<br>* column 2, line 50 - column 3, line 8 *<br>* column 4, line 6 - line 58 *<br>* claim 5; figures 3A-3C * | 1-3,7-9, 13,14 | G02F1/025<br>G02B6/12 |
| X | AGIO M ET AL: "IMPURITY MODES IN A TWO-DIMENSIONAL PHOTONIC CRYSTAL: COUPLING EFFICIENCY AND Q FACTOR"<br>JOURNAL OF THE OPTICAL SOCIETY OF AMERICA - B, OPTICAL SOCIETY OF AMERICA, WASHINGTON, US,<br>vol. 17, no. 12, December 2000 (2000-12), pages 2037-2042, XP001100654<br>ISSN: 0740-3224<br>* chapter 3, 1st paragraph *<br>* figure 2 * | 13,14 | |
| X | GB 2 347 230 A (MARCONI CASWELL LTD ;MARCONI ELECTRONIC SYST LTD (GB))<br>30 August 2000 (2000-08-30)<br>* abstract; claims 1-6; figure 1 * | 1,2,7,8 | |
| E | EP 1 255 136 A (AGILENT TECHNOLOGIES INC) 6 November 2002 (2002-11-06)<br>* abstract; figure 4 * | 1,7 | TECHNICAL FIELDS SEARCHED (Int.Cl.7)<br>G02F<br>G02B |

The present search report has been drawn up for all claims

| Place of search | Date of completion of the search | Examiner |
|---|---|---|
| THE HAGUE | 20 February 2003 | Gill, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 02 29 2403

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2003

| Patent document cited in search report | | Publication date | Patent family member(s) | | Publication date |
|---|---|---|---|---|---|
| US 6058127 | A | 02-05-2000 | WO | 9826316 A1 | 18-06-1998 |
| GB 2347230 | A | 30-08-2000 | EP | 1071978 A1 | 31-01-2001 |
| | | | WO | 0050952 A1 | 31-08-2000 |
| | | | JP | 2002538494 A | 12-11-2002 |
| EP 1255136 | A | 06-11-2002 | US | 2002159733 A1 | 31-10-2002 |
| | | | EP | 1255136 A2 | 06-11-2002 |
| | | | JP | 2002365599 A | 18-12-2002 |

EPO FORM P0459

For more details about this annex : see Official Journal of the European Patent Office, No. 12/82